# EUROPEAN PATENT APPLICATION

(11) **EP 3 382 313 A1**
(43) Date of publication of application: **03.10.2018**
(21) Application number: 17163555.0
(22) Date of filing: 29.03.2017
(51) Int. Cl.: F28D 9/00, F28D 17/00, F28F 3/14, F25B 35/04, F28D 20/00

(54) **HEAT EXCHANGER**

(71) Applicant: Ostbayerische Technische Hochschule Regensburg, 93049 Regensburg (DE)
(72) Inventor: Dawoud, Belal, 93077 Bad Abbach (DE)
(74) Representative: Lucke, Andreas

(57) **Abstract**

Provided is a heat exchanger for an adsorption heat transformation device. The heat exchanger comprises a stack of parallel plates, wherein a plate of the stack comprises an inlet and an outlet. The inlet is connected to the outlet by a plurality of parallel channels through the plate. The channels have a diameter between 1 millimeter and 3 millimeters. A clearance between channels of consecutive plates of the stack is between 1 millimeter and 2 millimeters and a space between the plates is fillable with an adsorbent.

## Description

### TECHNICAL FIELD

The present invention relates to heat exchangers. In particular, the present invention relates to heat exchangers for adsorption chillers, heat pumps, heat transformers or heat storage devices.

### BACKGROUND

Adsorption-type heating and/or cooling systems are operated in alternating cycles of adsorbing a gaseous fluid onto an adsorbent and desorbing the adsorbate from the adsorbent. In this regard, a heat exchanger may be used to alternatingly cool and heat the adsorbent.

### SUMMARY

The present invention provides a heat exchanger for an adsorption heat transformation device, the heat exchanger comprising a stack of parallel plates, wherein a plate of the stack comprises an inlet and an outlet, the inlet connected to the outlet by a plurality of parallel channels through the plate, the channels having a diameter between 1 millimeter and 3 millimeters, wherein a clearance between channels of consecutive plates of the stack is between 1 millimeter and 2 millimeters and a space between the plates is fillable with an adsorbent.

Notably, the term "adsorption heat transformation device" as used throughout the description and claims in particular refers to a device comprising an adsorbent, wherein the device is to be operated in alternating cycles of adsorbing a gaseous fluid onto the adsorbent and desorbing the adsorbate from the adsorbent, and encompasses such devices as adsorption chillers, heat pumps, heat transformers, heat storage devices, etc. Moreover, it is noted that the terms "inlet" and "outlet" as used throughout the description and claims in particular refer to openings of otherwise closed channels through which a fluid may flow into the channels/be discharged from the channels. However, although the terms "inlet" and "outlet" suggest a particular flow direction, it is clear that the flow direction may be reverted during a process involving the heat exchanger. Hence, the terms "inlet" and "outlet" should not be construed as limiting the claimed subject-matter to a particular flow direction. Rather, said terms are to be understood as encompassing any opening through which a fluid may flow into the channels/be discharged from the channels, while indicating that the fluid flows through the channels from one opening to the other. Furthermore, it is noted that the term "channel" as used throughout the description and claims in particular refers to fluid lines such as tubes, pipes, etc.

Moreover, it is noted that a formulation of the type "between x millimeters and y millimeters" is meant to include "x millimeters" and "y millimeters" as possible values. In addition, it is noted that the formulation "fillable with" as used throughout the description and claims is to be interpreted as "configured to be filled with" in a sense of being accessible to allow filling adsorbent material between the plates. Furthermore, it is noted that while the plates of the stack may - in principle - differ in size and/or shape, a plurality of (essentially) identical plates, i.e., plates exhibiting differences within manufacturing tolerances, may be the preferred option. Finally, it is noted that the term "adsorbent" as used throughout the description and claims in particular refers to (micro- or meso-) porous materials such as, for example, silica gel, zeolites and activated carbon.

Due to the small diameter of the channels, the heat transfer between the channel wall and a fluid flowing through the channel may be improved. Moreover, as the diameter of the channels has a similar dimension as the clearance between them, the mass ratio of the heat exchanger and the adsorbent may be kept low, thereby achieving high efficiency. Furthermore, large flow rates at low pressure losses may be achieved by increasing the number of parallel plates, e.g., by using a stack comprising more than 10, 20, 30, 40, 50, 60, 70, 80, 90, or more than 100 parallel plates.

Preferably, the plate comprises a plurality of protrusions abutting on protrusions of another plate of the stack.

For example, semi-hemispherical protrusions, e.g., formed by embossing, may be soldered to each other at their tips to connect consecutive plates. This may allow for achieving a constant clearance between the channels throughout the stack.

Preferably, the plate comprises sheets that abut on each other, the channels are formed by indentations in the sheets, and the inlet and the outlet are formed by cut-outs in the sheets.

For example, the sheets may be deep-drawn, e.g., using the same die, thereby allowing to reduce the manufacturing effort while achieving low sheet thickness and precisely matching indentations.

Preferably, the sheets have a thickness between 0.2 millimeters and 0.4 millimeters.

Thereby, the mass of the heat exchanger may be kept low.

Preferably, the sheets are comprised of stainless steel and preferably nickel-soldered.

Accordingly, a wide range of refrigerants may be used with the heat exchanger, such as water, methanol, ethanol, and ammonia, without causing corrosion to the heat exchanger.

Preferably, a surface of a sheet around the cut-outs abuts on a surface of the other plate.

Accordingly, inlets and outlets of consecutive plates may be connected, thereby facilitating distribution of a fluid which is to be guided through the heat exchanger onto the plates and onto the channels within the plates, and collection of the fluid from the channels and plates once the fluid has crossed the channels.

Preferably, the heat exchanger further comprises two planar sheets, the planar sheets being parallel to the plates and sandwiching the stack, wherein the planar sheets have a thickness of 0.7 millimeters to 3 millimeters.

Hence, the stack may be provided with protective planar metal sheets on both sides of the stack which, for example, may be soldered to the protrusions of the consecutive plate, thereby protecting the channels from mechanical strain without substantially increasing the total mass of the heat exchanger.

Preferably, the planar sheets comprise cut-outs connected to the inlet and the outlet, respectively.

Accordingly, the fluid may flow perpendicularly to the parallel plates through the inlet and the outlet to improve evenness of the distribution of the fluid onto the channels.

Preferably, the heat exchanger further comprises a perforated housing, accommodating the stack.

Hence, loose adsorbent material may be used which may be secured in the space between the plates by the housing while ensuring that a gaseous fluid may flow through the adsorbent material.

Preferably, an adsorption heat transformation device comprises one or two heat exchangers.

For instance, the adsorption heat transformation device may comprise two essentially identical heat exchangers to reduce the production effort and costs.

Preferably, the adsorption heat transformation device comprises an adsorbent arranged between the plates of one heat exchanger.

Hence, the one heat exchanger may be used to cool/heat the adsorbent while another heat exchanger may be used to evaporate/condense the refrigerant.

Preferably, the adsorbent comprises pellets or grains of adsorbent material.

Hence, manufacturing of the device can be facilitated and a gaseous refrigerant may flow freely through the filled-in adsorbent material.

Preferably, the pellets or grains have a mean diameter between 0.3 millimeters and 0.7 millimeters.

Thus, a transport of the gaseous fluid (refrigerant in the gaseous phase and adsorbate in its adsorbed or bonded state inside the adsorbent) to, inside and from the adsorbent material may be improved.

Preferably, a system comprises the device and a first loop comprising a first fluid and a second loop comprising a second fluid, wherein during operation the first fluid is to flow through the parallel channels and the second fluid is to flow through the space and be adsorbed onto the adsorbent.

Thereby, heat generated by adsorption may be transferred to the first fluid. The heat may then be transferred from the first fluid to a heating loop, using a further heat exchanger, e.g., for heating a building (heat-pump operation), e.g., during cold weather. During a cooling operation (e.g., during hot weather), heat may be drawn from the building (to cool it) and added to the refrigerant (second fluid) to evaporate it.

Preferably, the system is configured to alternatingly cool and heat the heat exchanger during operation.

Thus, heat generated during adsorption may be removed in a first half-cycle and the adsorbate may be removed from the adsorbent in a second half-cycle.

Preferably, a method of forming the heat exchanger comprises providing planar metal sheets, forming and cutting the sheets, and joining the sheets, wherein the plate comprises two joined sheets.

For, example, the metal sheets may be deep-drawn and fused at the protrusions formed at a convex side of each sheet, thereby providing for an open, lightweight yet robust structure with superior heat transfer properties.

### BRIEF DESCRIPTION OF THE DRAWINGS

The foregoing aspects and many of the attendant advantages of this invention will become more readily appreciated as the same becomes better understood by reference to the following detailed description, when taken in conjunction with the accompanying drawings, wherein like reference numerals refer to like parts throughout the various views, unless otherwise specified.
Fig. 1 shows a perspective view of a portion of a sheet in accordance with a preferred embodiment;
Fig. 2 shows a cross-sectional view along the line A-A in Fig. 1;
Fig. 3 shows a top view of a portion of the sheet of Fig. 1 and another cross-sectional view along the line A-A in Fig. 1;
Fig. 4 shows a perspective view of the sheet of Fig. 1;
Fig. 5 shows a perspective view of a sheet in accordance with another preferred embodiment;
Fig. 6 shows a cross-sectional view of two stacked plates;
Fig. 7 shows a perspective view of a plate stack accommodated in a housing; and
Fig. 8 shows a flow chart of a process of manufacturing the plate stack.

### DETAILED DESCRIPTION

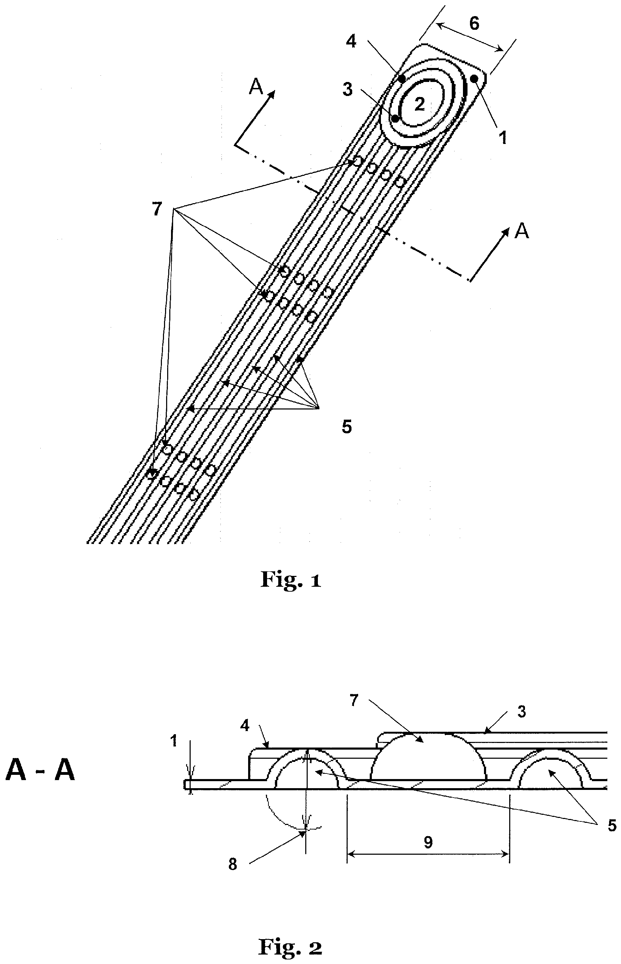

Fig. 1 shows a portion of a deep-drawn elongated sheet 1. The sheet 1 may be made of metal such as, for example, stainless-steel (to prevent corrosion). The oblong sheet 1 has a circular cut-out or opening 2 within a first recessed ring 3 formed at a concave side of a first end of the elongated sheet 1. The first recessed ring 3 is surrounded by a second recessed ring 4. As shown in Fig. 1, indentations 5 extend from the second recessed ring 4 along a length direction of the elongated sheet 1 (i.e., towards its second end). The width 6 of the elongated sheet 1 is essentially given by the number and width of the parallel indentations 5 and the protrusions 7 between the indentations 5 on the convex side of the sheet 1.

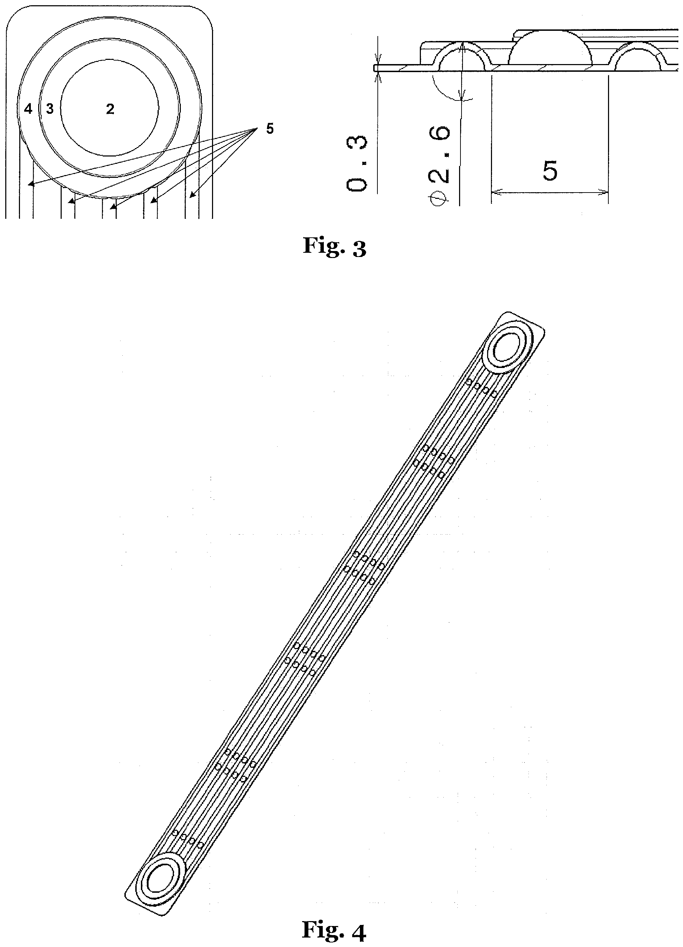

As shown in Fig. 2, the cross-sections of the indentations 5 form semi-circles, wherein the surface of the second recessed ring 4 is coplanar with (lines along) the bottom of the indentations 5. In other words, a depth of the second recessed ring 4 equals the outer diameter 8 of the semi-circles divided by two minus the sheet thickness. For example, the outer diameter 8 of the indentations 5 may be between 1.4 millimeters and 3.8 millimeters, e.g. 2.6 millimeters as shown in Fig. 3. The inner diameter of the indentations 5 may be between 1 millimeter and 3 millimeters, e.g., 2 millimeters. The sheet thickness may be between 0.2 millimeters and 0.4 millimeters, e.g., 0.3 millimeters as shown in Fig. 3. The depth of the second recessed ring 4 may thus be half of the inner diameter of the indentations 5, i.e., between 0.5 millimeters and 1.5 millimeters, e.g., 1 millimeter.

Moreover, the protrusions 7 may have a semi-circular cross-section to increase rigidity of the sheet 1, wherein the surface of the first recessed ring 3 on the convex side of the sheet 1 is coplanar with the tips of the protrusions 7. In other words, a depth of the first recessed ring 3 may be approximately equal to the outer diameter of the protrusions 7 divided by two minus the sheet thickness. For example, the outer diameter of the protrusions 7 may be between 2.4 millimeters and 5.8 millimeters, e.g. 4.1 millimeters, and the depth of the first recessed ring 3 may be between 1 millimeter and 2.5 millimeters. Furthermore, the free distance 9 between the indentations 5 in the width direction may be between 2 millimeters and 6 millimeters, i.e., about two times the inner diameter of the indentations 5, e.g., 5 millimeters as shown in Fig. 3.

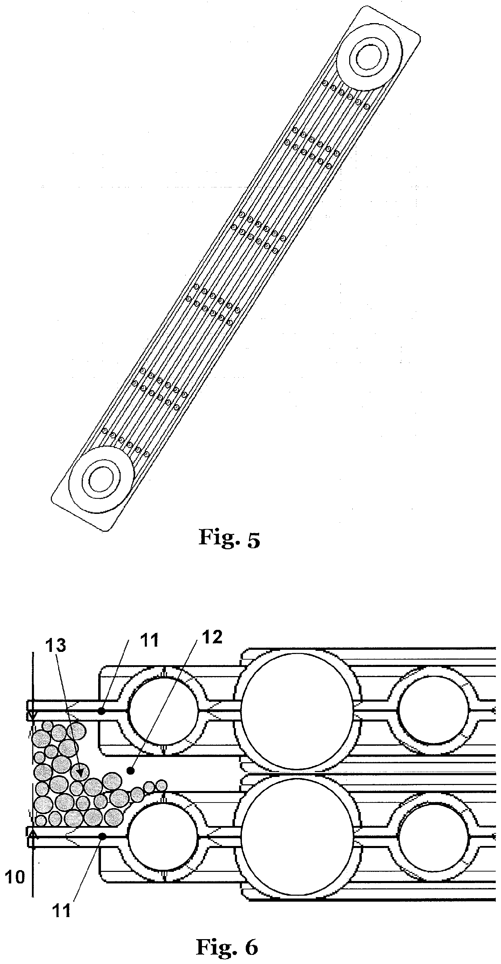

Fig. 4 shows a perspective view of the sheet 1 of Fig. 1. As shown in Fig. 4, the sheet 1 is symmetrical along center lines in the length and width direction. Moreover, the protrusions 7 are arranged in rows extending in the width direction. Each protrusion row comprises a number of protrusions 7 which equals the number of parallel indentations 5 minus one. I.e. each protrusion row comprises four protrusions 7 which are interspersed between five indentations 5. However, as depicted in Fig. 5 the design of the sheet 1 is not limited to a particular number of indentations 5 and interspersed protrusions 7. Rather, the sheet 1 may also comprise seven parallel indentations (as shown in Fig. 5), nine parallel indentations 5, eleven parallel indentations, etc. Moreover, the sheet 1 may also comprise an even number of indentations 5.

As shown in Fig. 6, a pair of sheets 1 may be joined to from a plate 11, wherein indentations 5 of the sheets 1 form cylindrical channels, tubes or pipes which extend parallel in the length direction of the plate 11. The two stacked plates 11, shown exemplarily in Fig. 6, may be joined at the contact areas of the protrusions 7 and the first recessed rings 3, e.g. by soldering such as, for example, by nickel-soldering. Hence, a gap or a clearance 10 between the circumferential edges of the plates 11 may be between 2 millimeters and 5 millimeters, e.g., 3 millimeters, and a clearance between the channels of the parallel plates 11 may be between 1 millimeter and 2 millimeters, e.g., 1.5 millimeters. Moreover, as schematically indicated in Fig. 6, the free space 12 between the plates 11 may be filled with an adsorbent 13 such as, for example, pellets or grains of an adsorbent material which may, for instance, have a diameter between 0.3 and 0.7 millimeters.

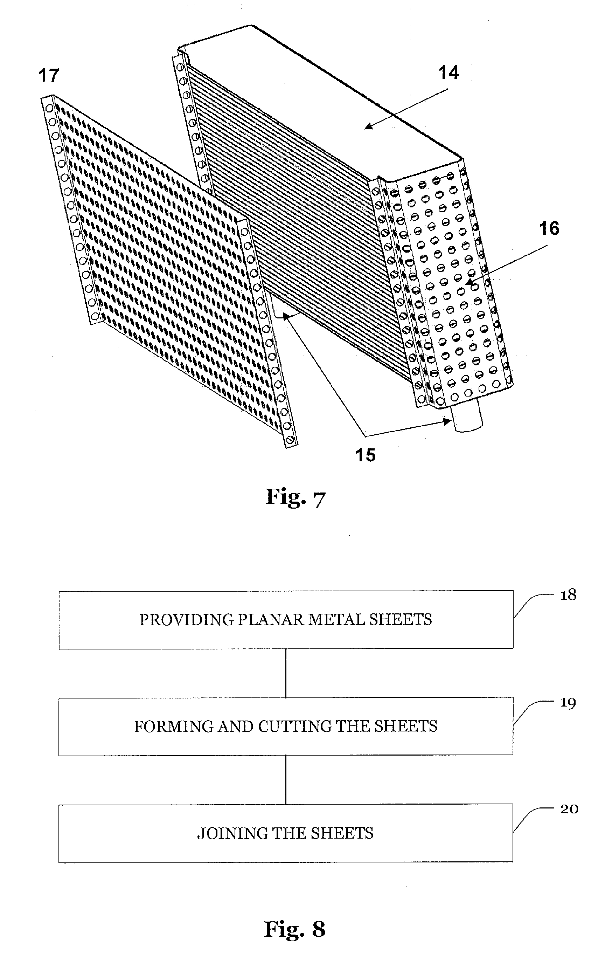

Fig. 7 shows a stack of about forty plates 11 sandwiched by two planar sheets 14 having a thickness between 0.7 millimeters to 3 millimeters and soldered to protrusions 7 and first recessed rings 3 of the abutting sheets 1. One of the sheets 14 has openings which are connected to inlet/outlet pipes 15. However, it is clear that the inlet/outlet pipes 15 may also be connected to different planar sheets 14, e.g., to opposite sides of the stack. As shown in Fig. 7, the stack is accommodated in a perforated housing which comprises two perforated sheets 16 and 17. The perforated sheets 16 and 17 may, for example, be made from the same material and have the same dimensions as the sheets 1 forming the plates 11 or the planar sheets 14.

When attached to each other, the perforated sheets 16 and 17 may enclose the face sides of the stack, thus securing the adsorbent 13 within the space between the plates 11. In this regard, it is noted that although the perforated sheets 16 and 17 are depicted as having circular openings, openings of various shapes may be possible such as, for example slits. Moreover, during operation, the inlet/outlet pipes 15 may be connected to a first fluid loop (not shown) comprising a first fluid which flows through the channels of the plates 11 while a second fluid of a second fluid loop (not shown) flows through the space between the plates 11. For example, the stack may be integrated into an adsorption heat transformation device (not shown) which is operated in alternating cycles of adsorbing the refrigerant onto the adsorbent 13 and desorbing it from the adsorbent 13.

Fig. 8 shows a flow chart of a process of manufacturing the stack of plates 11. The process begins at step 18 with providing planar, oblong sheets which may, for example have rounded corners. After deep-drawing and cutting the planar sheets at step 19 to provide the inlet/outlet openings 2, the recessed rings 3 and 4, the indentations 5 and the protrusions 7, the sheets 1 may be joined, e.g., by soldering, at step 20 and the joined sheets 1 (which may also be referred to as a plate 11 having a plurality of channels connecting an inlet of the plate 11 to the outlet) may be stacked to provide a heat exchanger having an open structure.

If corrosion resistant materials are used such as stainless-steel sheets 1 which are nickel-soldered to each other, the heat exchanger may be safely used with any refrigerant including water, methanol, ethanol, ammonia, etc. In this regard, it is noted that the ratio of specific heat capacity between water (as an example of a commonly used heat transfer fluid (first fluid)) and stainless steel is about eight. Thus, the reduction of the channel volume significantly reduces the overall specific heat capacity of the heat exchanger.

In order to achieve a high-volume flow despite the small dimension (or diameter) of the parallel channels in the plates 11, a large number of parallel plates 11 may be used such that the volume flow is divided onto a large number of parallel channels to have a suitably low volume flow per channel. As the channels are straight, flow resistance can be further reduced. Moreover, fluid flow through the channels may be laminar and allow for a small Nusselt number.

As the heat transfer coefficient (which also depends on the Nusselt number) is inversely proportional to the dimension (or diameter) of the channels, a high heat transfer coefficient may thus be achieved. Furthermore, a high fin-efficiency may be achieved, as the fin thickness is two times the sheet 1 thickness, while the fin height (i.e., the free distance 9 between the indentations 5 in the width direction) may be only about two times the inner diameter of the indentations 5.

### LIST OF REFERENCE SIGNS

- 1: sheet
- 2: opening/cut-out
- 3: ring
- 4: ring
- 5: indentation
- 6: width
- 7: protrusion
- 8: diameter
- 9: distance
- 10: clearance
- 11: plate made out of two processed sheets 1
- 12: free space between two successive plates 11
- 13: adsorbent
- 14: planar sheet
- 15: inlet/outlet pipes
- 16: perforated sheet
- 17: perforated sheet
- 18-20: steps

## Claims

1. A heat exchanger for an adsorption heat transformation device, the heat exchanger comprising:
a stack of parallel plates (11), wherein a plate (11) of the stack comprises an inlet and an outlet, the inlet connected to the outlet by a plurality of parallel channels through the plate (11), the channels having a diameter between 1 millimeter and 3 millimeters; wherein
a clearance between channels of consecutive plates (11) of the stack is between 1 millimeter and 2 millimeters; and
a space between the plates (11) is fillable with an adsorbent (13).

2. The heat exchanger of claim 1, wherein the plate (11) comprises a plurality of protrusions (7) abutting on protrusions (7) of another plate (11) of the stack.

3. The heat exchanger of claim 2, wherein
the plate (11) comprises sheets (1) that abut on each other;
the channels are formed by indentations (5) in the sheets (1); and
the inlet and the outlet are formed by cut-outs (2) in the sheets (2),
wherein the sheets preferably have a thickness between 0.2 millimeters and 0.4 millimeters.

4. The heat exchanger of claim 3, wherein the sheets (1) are comprised of stainless steel and preferably nickel-soldered.

5. The heat exchanger of claim 3 or 4, wherein a surface of a sheet (1) around the cut-outs (2) abuts on a surface of the other plate (11).

6. The heat exchanger of any one of claims 1 to 5, further comprising:
two planar sheets (14), the planar sheets (14) being parallel to the plates (11) and sandwiching the stack, wherein the planar sheets (14) have a thickness of 0.7 millimeters to 3 millimeters.

7. The heat exchanger of claim 6, wherein the planar sheets (14) comprise cut-outs connected to the inlet and the outlet, respectively.

8. The heat exchanger of any one of claims 1 to 7, further comprising:
a perforated housing, accommodating the stack.

9. An adsorption heat transformation device, the device comprising:
one or two heat exchangers according to any one of claims 1 to 8.

10. The adsorption heat transformation device of claim 9, comprising:
an adsorbent (13) arranged between the plates (11) of one heat exchanger.

11. The device of claim 10, wherein the adsorbent (13) comprises pellets or grains of adsorbent material.

12. The device of claim 11, wherein the pellets or grains have a mean diameter between 0.3 millimeters and 0.7 millimeters.

13. A system, comprising:
a device according to any one of claims 10 to 12;
a first loop comprising a first fluid; and
a second loop comprising a second fluid; wherein during operation the first fluid is to flow through the parallel channels; and
the second fluid is to flow through the space and be adsorbed onto the adsorbent (13).

14. The system of claim 13, wherein the system is configured to alternatingly cool and heat the heat exchanger during operation.

15. A method of forming a heat exchanger according to any one of claims 1 to 8, the method comprising:
providing (18) planar metal sheets;
forming (19) and cutting the sheets; and
joining (20) the sheets (1);
wherein the plate (11) comprises two joined sheets (1).
